# EUROPÄISCHE PATENTSCHRIFT

(11) **EP 3 620 367 B1**
(45) Veröffentlichungstag und Bekanntmachung des Hinweises auf die Patenterteilung: **29.09.2021**
(21) Anmeldenummer: 19194003.0
(22) Anmeldetag: 28.08.2019
(51) Int. Cl.: B63G 8/38, B63G 8/00, A01K 79/00

(54) **OPTISCHE ERFASSUNG VON FISCHEN IN SCHWÄRMEN**
OPTICAL DETECTION OF FISH IN SHOALS
DÉTECTION OPTIQUE DE POISSONS EN BANCS

(30) Priorität: 05.09.2018 DE 102018215052
(43) Veröffentlichungstag der Anmeldung: 11.03.2020
(73) Patentinhaber: ATLAS MARIDAN ApS, 2960 Rungsted Kyst (DK); thyssenkrupp AG, 45143 Essen (DE)
(72) Erfinder: Abildgaard, Max, 28205 Bremen (DE)
(74) Vertreter: thyssenkrupp Intellectual Property GmbH

(56) Entgegenhaltungen:
- EP-A2- 2 423 101
- WO-A1-01/05651
- WO-A1-2012/087033
- WO-A1-2018/126978
- CN-A- 106 043 632
- US-B1- 7 796 809

## Beschreibung

Die Erfindung betrifft ein Verfahren zur Erfassung eines Fischschwarms mit einem Fischbeobachtungswasserfahrzeug.

Aus der nachveröffentlichten DE 10 2017 216 608 B3 ist ein Verfahren zur Verminderung von Beifang unter Verwendung eines Fischbeobachtungswasserfahrzeugs bekannt.

Aus der WO 2018 / 126 978 A1 ist ein Fischfinder, ein unbemanntes Fahrzeug und ein unbemanntes Detektionssystem bekannt.

Aus der EP 2 423 101 A2 ist ein unbemanntes Unterwasserfahrzeug und ein Verfahren zum Betrieb eines unbemannten Unterwasserfahrzeugs bekannt.

Aus der US 7 796 809 B1 ist ein 3D-Erfassungsmodul bekannt.

Es hat sich herausgestellt, dass Fische auf Bewegungen oft mit Flucht reagieren. Dieses muss aber bei der optischen Erfassung von Fischschwärmen vermieden werden. Dieses gilt um so mehr, je kürzer die zur Verfügung stehende Sichtweite ist.

Aufgabe der Erfindung ist es, ein Verfahren bereitzustellen, welches die Fluchtneigung der Fische verringert.

Gelöst wird diese Aufgabe durch das Verfahren mit den in Anspruch 1 angegebenen Merkmalen sowie durch das Fischbeobachtungswasserfahrzeug mit den in Anspruch 16 angegebenen Merkmalen. Vorteilhafte Weiterbildungen ergeben sich aus den Unteransprüchen, der nachfolgenden Beschreibung sowie der Zeichnung.

Für das erfindungsgemäße Verfahren zur Erfassung eines Fischschwarms mit einem Fischbeobachtungswasserfahrzeug wird als Fischbeobachtungswasserfahrzeug ein autonomes Unterwasserfahrzeug ausgewählt. Das Verfahren umfasst die folgenden Schritte:
a) Erfassen eines Fischschwarms,
b) Anfahren des Fischschwarms, wobei das Fischbeobachtungswasserfahrzeug den Fischschwarm horizontal und in geringerer (oder größerer) Tauchtiefe als der Fischschwarm anfährt,
c) Orientieren des Fischbeobachtungswasserfahrzeugs, sodass der Bug des Fischbeobachtungswasserfahrzeugs zum Grund gerichtet ist und das Heck des Fischbeobachtungswasserfahrzeugs zur Wasseroberfläche gerichtet ist,
d) Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt.

Für ein alternatives erfindungsgemäße Verfahren zur Erfassung eines Fischschwarms mit einem Fischbeobachtungswasserfahrzeug wird als Fischbeobachtungswasserfahrzeug ein autonomes Unterwasserfahrzeug ausgewählt. Das Verfahren umfasst die folgenden Schritte:
e) Erfassen eines Fischschwarms,
f) Anfahren des Fischschwarms, wobei das Fischbeobachtungswasserfahrzeug den Fischschwarm horizontal und in größerer Tauchtiefe als der Fischschwarm anfährt,
g) Orientieren des Fischbeobachtungswasserfahrzeugs, sodass das Heck des Fischbeobachtungswasserfahrzeugs zum Grund gerichtet ist und der Bug des Fischbeobachtungswasserfahrzeugs zur Wasseroberfläche gerichtet ist,
h) Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt.

Für ein alternatives erfindungsgemäße Verfahren zur Erfassung eines Fischschwarms mit einem Fischbeobachtungswasserfahrzeug wird als Fischbeobachtungswasserfahrzeug ein autonomes Unterwasserfahrzeug ausgewählt. Das Verfahren umfasst die folgenden Schritte:
i) Erfassen eines Fischschwarms,
j) Anfahren des Fischschwarms, wobei das Fischbeobachtungswasserfahrzeug den Fischschwarm horizontal und in größerer Tauchtiefe als der Fischschwarm anfährt,
k) Orientieren des Fischbeobachtungswasserfahrzeugs, sodass der Bug des Fischbeobachtungswasserfahrzeugs zum Grund gerichtet ist und das Heck des Fischbeobachtungswasserfahrzeugs zur Wasseroberfläche gerichtet ist,
l) Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt.

Bei dieser Ausführungsform durchquert das Fischbeobachtungswasserfahrzeug den Schwarm quasi rückwärts.

Vorteil des erfindungsgemäßen Verfahrens ist, dass das Fischbeobachtungsfahrzeug den Fischschwarm praktischen senkrecht durchquert. Fische haben insbesondere vor Raubfischen einen Fluchtreflex. Diese erwarten Fische aber regelmäßig in horizontaler Richtung. Durch die vertikale Bewegung kann die Fluchtneigung rapide gesenkt werden.

Das Erfassen in Schritt a) kann entweder durch das Fischbeobachtungswasserfahrzeug selbst oder auch durch ein anderes Wasserfahrzeug, insbesondere ein Fischfangwasserfahrzeug, erfolgen, insbesondere wenn das Wasserfahrzeug das Fischbeobachtungswasserfahrzeug mitführt und erst zur Durchführung des Verfahrens absetzt.

In einer weiteren Ausführungsform der Erfindung wird als Fischbeobachtungswasserfahrzeug ein autonomes Unterwasserfahrzeug mit wenigstens einem ersten Sonar ausgewählt, wobei in Schritt b) das erste Sonar nach unten oder in Schritt f) beziehungsweise in Schritt j) nach oben ausgerichtet wird.

Durch die Anordnung der Haupterfassungsrichtung des Sonars quer zur Längsrichtung des Fischbeobachtungswasserfahrzeugs kann das Fischbeobachtungswasserfahrzeug bei einer geringeren beziehungswiese bei größerer Tauchtiefe als der Tauchtiefe des Fischschwarms diesen mit dem Sonar in einfacher Weise erfassen.

In einer weiteren Ausführungsform der Erfindung wird als Fischbeobachtungswasserfahrzeug ein autonomes Unterwasserfahrzeug mit wenigstens einem ersten Sonar ausgewählt, wobei in Schritt d) beziehungsweise in Schritt h) beziehungsweise in Schritt l) das erste Sonar im Wesentlichen parallel zur Wasseroberfläche ausgerichtet wird.

Unter im Wesentlichen parallel zur Wasseroberfläche bedeutet im Sinne der Erfindung plus minus 20 ° zur horizontalen Ebene, welche parallel zur Wasseroberfläche durch den Sensor verläuft.

Vorteil dieser Ausführungsform ist, dass eine optimale Erfassung des Fischschwarms bei der senkrechten Durchquerung möglich ist. Zusätzlich ergibt sich die Synergie zur optionalen Erfassung des Fischschwarms in Schritt b) beziehungsweise in Schritt f) beziehungsweise in Schritt j).

In einer weiteren Ausführungsform der Erfindung wird als Fischbeobachtungswasserfahrzeug ein autonomes Unterwasserfahrzeug mit wenigstens einem ersten optischen Sensor ausgewählt wird, wobei in Schritt d) beziehungsweise Schritt h) beziehungsweise in Schritt l) der erste optische Sensor im Wesentlichen parallel zur Wasseroberfläche ausgerichtet wird.

Vorteil dieser Ausführungsform ist, dass eine optimale Erfassung des Fischschwarms bei der senkrechten Durchquerung möglich ist: Durch die seitliche Beobachtung der Fische kann der Umriss der Fische sowie die Zeichnung der Fische beobachtet werden. Dieses erleichtert eine Klassifizierung beziehungsweise Bestimmung der Fischart.

In einer weiteren Ausführungsform der Erfindung wird als Fischbeobachtungswasserfahrzeug ein autonomes Unterwasserfahrzeug mit wenigstens einem ersten Leuchtmittel ausgewählt wird, wobei in Schritt d) beziehungsweise in Schritt h) beziehungsweise in Schritt l) das erste Leuchtmittel zusammen mit dem ersten optischen Sensor zur Erfassung verwendet wird. Das erste Leuchtmittel kann ein kontinuierlich emittierendes Leuchtmittel oder ein diskontinuierliches Leuchtmittel sein. Ein diskontinuierliches Leuchtmittel hat sich als vorteilhaft herausgestellt. Bei dem diskontinuierlichen Leuchtmittel handelt es sich beispielsweise und bevorzugt um ein Blitzgerät, insbesondere um einen Stroboskop-Blitz. Hierdurch ist das Einfrieren der Bewegung der Fische bei der optischen Erfassung möglich, sofern die Blitzdauer ausreichend kurz gewählt wird.

In einer weiteren Ausführungsform der Erfindung ist das wenigstens eine erste Leuchtmittel vom wenigstens einen ersten optischen Sensor beabstandet.

Der wenigstens eine erste optische Sensor weist eine Haupterfassungsrichtung auf und das wenigstens eine erste Leuchtmittel weist eine Hauptbelichtungsrichtung auf. Die Haupterfassungsrichtung des ersten optischen Sensors entspricht im Sinne der Erfindung der optischen Achse. Analog ist die Hauptbelichtungsrichtung des ersten Leuchtmittels im Sinne der Erfindung die Richtung, in welche das Leuchtmittel abstrahlt, wobei es sich hierbei üblicherweise um die Hauptachse eines Abstrahlkegels handelt. Zur Vermeidung von Lichtreflexionen insbesondere an Schwebeteilchen ist eine möglichst große Beabstandung zwischen dem ersten Leuchtmittel und dem ersten optischen Sensor wünschenswert und somit ein möglichst großer Winkel zwischen der Haupterfassungsrichtung und der Hauptbelichtungsrichtung.

In einer weiteren Ausführungsform der Erfindung weist das Fischbeobachtungswasserfahrzeug wenigstens eine erste Antenne auf, wobei die erste Antenne zum Empfang und/oder Senden von elektromagnetischen Wellen ausgebildet. Bevorzugt ist die erste Antenne am Heck des Fischbeobachtungswasserfahrzeugs angeordnet, bevorzugt erstreckt die erste Antenne sich in Längsrichtung des Fischbeobachtungswasserfahrzeugs hinter dem Fischbeobachtungswasserfahrzeug. Hierdurch ragt die erste Antenne optimal aus dem Wasser, wenn das Fischbeobachtungswasserfahrzeug die Wasseroberfläche mit dem Heck durchbricht. Die erste Antenne kann als Navigationsantenne, beispielsweise für GPS/GNSS, oder als Radioantenne, insbesondere zur Kommunikation mit einem weiteren Wasserfahrzeug ausgebildet sein. In einer weiteren bevorzugten Ausführungsform weist das Fischbeobachtungswasserfahrzeug eine erste Antenne und eine zweite Antenne auf, wobei die erste Antenne eine Navigationsantenne ist, und die zweite Antenne eine Radioantenne ist.

In einer weiteren Ausführungsform der Erfindung ist das wenigstens eine erste Leuchtmittel im Heck angeordnet. Hierdurch ist eine möglichst große Beabstandung zum ersten optischen Sensor möglich. Der erste optische Sensor wird vorzugsweise so weit wie möglich im Bug angeordnet, um den Abstand zu maximieren.

In einer weiteren Ausführungsform der Erfindung wird als Fischbeobachtungswasserfahrzeug ein autonomes Unterwasserfahrzeug mit wenigstens einem ersten Sonar und wenigstens einem ersten optischen Sensor ausgewählt wird, wobei das erste Sonar zur Ansteuerung des ersten optischen Sensors verwendet wird. Das erste Sonar löst den ersten optischen Sensor aus, sobald das erste Sonar wenigstens einen Fisch im optischen Erkennungsbereich des ersten optischen Sensors erfasst. Besonders bevorzugt löst das erste Sonar den ersten optischen Sensor aus, sobald das erste Sonar den wenigstens einen Fisch in einer für die optische Erfassung optimalen Position und/oder Orientierung innerhalb des Erkennungsbereichs des ersten optischen Sensors erfasst.

In einer weiteren Ausführungsform der Erfindung wird in Schritt d) beziehungsweise in Schritt h) beziehungsweise in Schritt l) mit verringerter Geschwindigkeit gefahren wird. Je geringer die Geschwindigkeit ist, desto geringer ist die Fluchtneigung der Fische. Jedoch ist eine zu langsame Erfassung insbesondere bei der Veränderung und dem Zug des Fischschwarms ebenfalls kritisch. Durch die senkrechte Bewegung kann eine höhere Geschwindigkeit im Vergleich zur horizontalen Bewegung erfolgen.

In einer weiteren Ausführungsform der Erfindung wird in Schritt d) beziehungsweise in Schritt h) beziehungsweise in Schritt l) das Fischbeobachtungswasserfahrzeug um die eigene Längsachse rotiert. Die Rotation kann entweder bei Vortrieb und somit in Schraubenform oder in Stillstand und somit als Rundumsicht erfolgen. Besonders bevorzugt erfolgt die Rotation in der Art, dass die Vortriebsgeschwindigkeit so gewählt wird, dass der Vortrieb innerhalb einer vollständigen Rotation kleiner als die Erfassungsbreite der Sensoren in vertikaler Richtung ist.

Durch die Rotation kann das Umfeld um das Fahrzeug abgesucht werden und somit ein Lagebild ermittelt werden. Wenn diese Erfassung ergibt, dass eine naheliegende Position eine bessere Erfassung erlaubt, so kann aus dem Lagebild ein Steuerbefehl generiert werden, welches das Fahrzeug langsam hierhin versetzt. Dies kann somit direkt oder indirekt erfolgen, beispielsweise als langsames seitliches aber gesteuertes driften.

In einer weiteren Ausführungsform der Erfindung werden nach Schritt d) die folgenden Schritte ausgeführt:
m) Orientieren des Fischbeobachtungswasserfahrzeugs, sodass das Heck des Fischbeobachtungswasserfahrzeugs zum Grund gerichtet ist und der Bug des Fischbeobachtungswasserfahrzeugs zur Wasseroberfläche gerichtet ist,
n) Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt.

Auf diese Weise kann der Fischschwarm beim Auftauchen erneut, vorzugsweise horizontal versetzt, erneut erfasst werden beziehungsweise andere Bereich erfasst werden.

Selbstverständlich kann nach Schritt n) erneut Schritt c) ausgeführt werden, sodass das Fischbeobachtungswasserfahrzeug in mehreren Durchgängen den Fischschwarm möglichst vollständig erfasst. Hierdurch kann die Aussagegenauigkeit über die Zusammensetzung des Fischschwarms gesteigert werden.

Analog ist dieses auch für die Anfahrten aus größerer Tauchtiefe möglich. Hierbei kann das Fischbeobachtungswasserfahrzeug entweder immer mit dem Bug voran oder immer mit dem Bug nach unten fahren. Fährt das Fischbeobachtungswasserfahrzeug immer mit dem Bug nach unten, so entfällt bei den Wendemanövern oberhalb oder unterhalb des Schwarms eine Drehung des Fischbeobachtungswasserfahrzeugs.

In einer weiteren Ausführungsform der Erfindung kehrt das Fischbeobachtungswasserfahrzeug nach Schritt d), Schritt h), Schritt l) oder Schritt n) in Schritt g) zur Wasseroberfläche zurück. Besonders bevorzugt durchstößt das Fischbeobachtungswasserfahrzeug in Schritt g) mit dem Heck die Wasseroberfläche. Dieses erleichtert eine einfache Wiederaufnahme des Fischbeobachtungswasserfahrzeugs. Dieses gilt insbesondere, wenn am Heck eine Navigationsantenne, beispielsweise für GPS/GNSS, oder eine Radioantenne, insbesondere zur Kommunikation, und/oder ein Leuchtmittel angeordnet ist.

In einer weiteren Ausführungsform der Erfindung verwendet das Fischbeobachtungswasserfahrzeug ein Einzel-Strahl-Sonar.

In einer weiteren Ausführungsform der Erfindung fährt das Fischbeobachtungswasserfahrzeug in Schritt a) beziehungsweise Schritt e) beziehungsweise Schritt i) ein Suchmanöver und ermittelt dabei die exakte aktuelle Position des Fischschwarms.

in einem weiteren Aspekt betrifft die Erfindung ein Fischbeobachtungswasserfahrzeug zur Durchführung des erfindungsgemäßen Verfahrens. Das Fischbeobachtungswasserfahrzeug weist wenigstens einen ersten optischen Sensor, wenigstens ein erstes Sonar auf, wobei der wenigstens eine erste optische Sensor und das wenigstens eine erste Sonar eine Haupterfassungsrichtung im Wesentlichen orthogonal zur Längsrichtung des Fischbeobachtungswasserfahrzeugs aufweisen. Unter im Wesentlich orthogonal wird im Sinne der Erfindung verstanden, dass die Haupterfassungsrichtung des ersten Sonars in einem Bereich von 70 ° bis 110 °zur Längsrichtung des Wasserfahrzeugs angeordnet ist.

Als Haupterfassungsrichtung wird beispielsweise bei einem optischen Sensor die optische Achse angesehen. Die Erfassung erfolgt nicht nur in diese Richtung, sondern in einem Winkelbereich, welcher von der verwendeten Brennweite abhängig ist und gegebenenfalls variiert werden kann. Analog gilt dieses auch für das Sonar.

Erfindungsgemäß weist das Fischbeobachtungswasserfahrzeug eine Trimmvorrichtung zur senkrechten Ausrichtung des Fischbeobachtungswasserfahrzeugs auf. Nachfolgend ist das erfindungsgemäße Verfahren anhand eines in der Zeichnung dargestellten Ausführungsbeispiels näher erläutert.

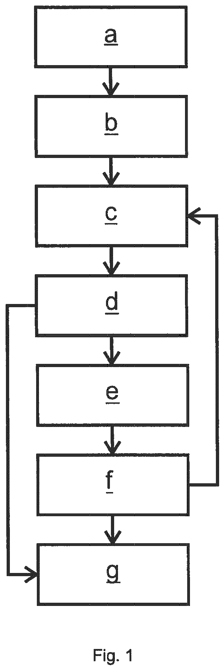

- Fig. 1: Ablaufdiagramm

In Fig. 1 ist das Verfahren dargestellt. In Schritt a) erfolgt das Erfassen eines Fischschwarms. In Schritt b) erfolgt das Anfahren des Fischschwarms, wobei das Fischbeobachtungswasserfahrzeug den Fischschwarm horizontal und in geringerer Tauchtiefe als der Fischschwarm anfährt. In Schritt c) erfolgt das Orientieren des Fischbeobachtungswasserfahrzeugs, sodass der Bug des Fischbeobachtungswasserfahrzeugs zum Grund gerichtet ist und das Heck des Fischbeobachtungswasserfahrzeugs zur Wasseroberfläche gerichtet ist. In Schritt d) erfolgt das Durchfahren des Fischschwarms durch das Fischbeobachtungswasserfahrzeug und dabei das optische Erfassen des Fischschwarms, wobei das Durchfahren in einem Winkel von mehr als 70 ° zur Wasseroberfläche erfolgt. In Schritt m) erfolgt das Orientieren des Fischbeobachtungswasserfahrzeugs, sodass das Heck des Fischbeobachtungswasserfahrzeugs zum Grund gerichtet ist und der Bug des Fischbeobachtungswasserfahrzeugs zur Wasseroberfläche gerichtet ist. In Schritt n) erfolgt das Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt. In Schritt g) kehrt das Fischbeobachtungswasserfahrzeug zur Wasseroberfläche zurück. Nach Schritt n) kann alternativ auch Schritt c) erneut ausgeführt werden. Nach Schritt d) kann das Fischbeobachtungswasserfahrzeug auch in Schritt g) an die Wasseroberfläche zurückkehren.

## Patentansprüche

1. Verfahren zur Erfassung eines Fischschwarms mit einem Fischbeobachtungswasserfahrzeug, wobei als Fischbeobachtungswasserfahrzeug ein autonomes Unterwasserfahrzeug ausgewählt wird, wobei das Verfahren die folgenden Schritte umfasst:
a) Erfassen eines Fischschwarms
b) Anfahren des Fischschwarms, wobei das Fischbeobachtungswasserfahrzeug den Fischschwarm horizontal und in geringerer Tauchtiefe als der Fischschwarm anfährt,
**dadurch gekennzeichnet, dass** das Verfahren die folgenden Schritte umfasst:
c) Orientieren des Fischbeobachtungswasserfahrzeugs, sodass der Bug des Fischbeobachtungswasserfahrzeugs zum Grund gerichtet ist und das Heck des Fischbeobachtungswasserfahrzeugs zur Wasseroberfläche gerichtet ist,
d) Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt.

2. Verfahren zur Erfassung eines Fischschwarms mit einem Fischbeobachtungswasserfahrzeug, wobei als Fischbeobachtungswasserfahrzeug ein autonomes Unterwasserfahrzeug ausgewählt wird, wobei das Verfahren die folgenden Schritte umfasst:
e) Erfassen eines Fischschwarms
f) Anfahren des Fischschwarms, wobei das Fischbeobachtungswasserfahrzeug den Fischschwarm horizontal und in größerer Tauchtiefe als der Fischschwarm anfährt,
**dadurch gekennzeichnet, dass** das Verfahren die folgenden Schritte umfasst:
g) Orientieren des Fischbeobachtungswasserfahrzeugs, sodass das Heck des Fischbeobachtungswasserfahrzeugs zum Grund gerichtet ist und der Bug des Fischbeobachtungswasserfahrzeugs zur Wasseroberfläche gerichtet ist,
h) Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt.

3. Verfahren zur Erfassung eines Fischschwarms mit einem Fischbeobachtungswasserfahrzeug, wobei als Fischbeobachtungswasserfahrzeug ein autonomes Unterwasserfahrzeug ausgewählt wird, wobei das Verfahren die folgenden Schritte umfasst:
i) Erfassen eines Fischschwarms
j) Anfahren des Fischschwarms, wobei das Fischbeobachtungswasserfahrzeug den Fischschwarm horizontal und in größerer Tauchtiefe als der Fischschwarm anfährt,
**dadurch gekennzeichnet, dass** das Verfahren die folgenden Schritte umfasst:
k) Orientieren des Fischbeobachtungswasserfahrzeugs, sodass der Bug des Fischbeobachtungswasserfahrzeugs zum Grund gerichtet ist und das Heck des Fischbeobachtungswasserfahrzeugs zur Wasseroberfläche gerichtet ist,
l) Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt.

4. Verfahren zur Erfassung eines Fischschwarms nach einem der vorstehenden Ansprüche, **dadurch gekennzeichnet, dass** als Fischbeobachtungswasserfahrzeug ein autonomes Unterwasserfahrzeug mit wenigstens einem ersten Sonar ausgewählt wird, wobei in Schritt b) das erste Sonar nach unten oder in Schritt f) beziehungsweise in Schritt j) nach oben ausgerichtet wird.

5. Verfahren zur Erfassung eines Fischschwarms nach einem der vorstehenden Ansprüche, **dadurch gekennzeichnet, dass** als Fischbeobachtungswasserfahrzeug ein autonomes Unterwasserfahrzeug mit wenigstens einem ersten Sonar ausgewählt wird, wobei in Schritt d) beziehungsweise Schritt h) beziehungsweise in Schritt l) das erste Sonar im Wesentlichen parallel zur Wasseroberfläche ausgerichtet wird.

6. Verfahren zur Erfassung eines Fischschwarms nach einem der vorstehenden Ansprüche, **dadurch gekennzeichnet, dass** als Fischbeobachtungswasserfahrzeug ein autonomes Unterwasserfahrzeug mit wenigstens einem ersten optischen Sensor ausgewählt wird, wobei in Schritt d) beziehungsweise Schritt h) beziehungsweise in Schritt l) der erste optische Sensor im Wesentlichen parallel zur Wasseroberfläche ausgerichtet wird.

7. Verfahren nach Anspruch 6, **dadurch gekennzeichnet, dass** als Fischbeobachtungswasserfahrzeug ein autonomes Unterwasserfahrzeug mit wenigstens einem ersten Leuchtmittel ausgewählt wird, wobei in Schritt d) beziehungsweise in Schritt h) beziehungsweise in Schritt l) das erste Leuchtmittel zusammen mit dem ersten optischen Sensor zur Erfassung verwendet wird.

8. Verfahren zur Erfassung eines Fischschwarms nach einem der vorstehenden Ansprüche, **dadurch gekennzeichnet, dass** als Fischbeobachtungswasserfahrzeug ein autonomes Unterwasserfahrzeug mit wenigstens einem ersten Sonar und wenigstens einem ersten optischen Sensor ausgewählt wird, wobei das erste Sonar zur Ansteuerung des ersten optischen Sensors verwendet wird, wobei das erste Sonar den ersten optischen Sensor auslöst, sobald das erste Sonar wenigstens einen Fisch im optischen Erkennungsbereich des ersten optischen Sensors erfasst.

9. Verfahren zur Erfassung eines Fischschwarms nach einem der vorstehenden Ansprüche, **dadurch gekennzeichnet, dass** in Schritt d) beziehungsweise in Schritt h) beziehungsweise in Schritt l) mit verringerter Geschwindigkeit gefahren wird.

10. Verfahren zur Erfassung eines Fischschwarms nach einem der vorstehenden Ansprüche, **dadurch gekennzeichnet, dass** in Schritt d) beziehungsweise in Schritt h) beziehungsweise in Schritt l) das Fischbeobachtungswasserfahrzeug um die eigene Längsachse rotiert wird.

11. Verfahren zur Erfassung eines Fischschwarms nach einem der vorstehenden Ansprüche, **dadurch gekennzeichnet, dass** nach Schritt d) die folgenden Schritte ausgeführt werden:
m) Orientieren des Fischbeobachtungswasserfahrzeugs, sodass das Heck des Fischbeobachtungswasserfahrzeugs zum Grund gerichtet ist und der Bug des Fischbeobachtungswasserfahrzeugs zur Wasseroberfläche gerichtet ist,
n) Durchfahren des Fischschwarms durch das Fischbeobachtungswasserfahrzeug und dabei optisches Erfassen des Fischschwarms, wobei das Durchfahren in einem Winkel von mehr als 70 ° zur Wasseroberfläche erfolgt.

12. Verfahren zur Erfassung eines Fischschwarms nach einem der vorstehenden Ansprüche, **dadurch gekennzeichnet, dass** das Fischbeobachtungswasserfahrzeug nach Schritt d), Schritt h), Schritt l) oder Schritt n) in Schritt g) zur Wasseroberfläche zurückkehrt.

13. Verfahren zur Erfassung eines Fischschwarms nach Anspruch 12, **dadurch gekennzeichnet, dass** das Fischbeobachtungswasserfahrzeug in Schritt g) mit dem Heck die Wasseroberfläche durchstößt.

14. Verfahren zur Erfassung eines Fischschwarms nach einem der vorstehenden Ansprüche, **dadurch gekennzeichnet, dass** das Fischbeobachtungswasserfahrzeug ein Einzel-Strahl-Sonar verwendet.

15. Verfahren zur Erfassung eines Fischschwarms nach einem der vorstehenden Ansprüche, **dadurch gekennzeichnet, dass** das Fischbeobachtungswasserfahrzeug in Schritt a) beziehungsweise Schritt e) beziehungsweise Schritt i) ein Suchmanöver fährt und dabei die exakte aktuelle Position des Fischschwarms ermittelt.

16. Fischbeobachtungswasserfahrzeug zur Durchführung des Verfahrens nach einem der vorherstehenden Ansprüche, wobei das Fischbeobachtungswasserfahrzeug wenigstens einen ersten optischen Sensor, wenigstens ein erstes Sonar aufweist, wobei der wenigstens eine erste optische Sensor und das wenigstens eine erste Sonar eine Haupterfassungsrichtung im Wesentlichen orthogonal zur Längsrichtung des Fischbeobachtungswasserfahrzeugs aufweisen, **dadurch gekennzeichnet, dass** das Fischbeobachtungswasserfahrzeug eine Trimmvorrichtung zur senkrechten Ausrichtung des Fischbeobachtungswasserfahrzeugs aufweist.

## Claims

1. Method for detecting a shoal of fish using a fish observation water vehicle, an autonomous underwater vehicle being selected as fish observation water vehicle, wherein the method comprises the following steps:
a) detecting a shoal of fish,
b) approaching the shoal of fish, with the fish observation water vehicle approaching the shoal of fish in horizontal fashion and at a shallower diving depth than the shoal of fish,
**characterized in that** the method comprises the following steps:
c) orienting the fish observation water vehicle such that the bow of the fish observation water vehicle is directed to the floor and the stern of the fish observation water vehicle is directed to the water surface,
d) passing through the shoal of fish by means of the fish observation water vehicle and, in the process, optically detecting the shoal of fish, the passage therethrough being implemented at an angle of more than 70° with respect to the water surface.

2. Method for detecting a shoal of fish using a fish observation water vehicle, an autonomous underwater vehicle being selected as fish observation water vehicle, wherein the method comprises the following steps:
e) detecting a shoal of fish,
f) approaching the shoal of fish, with the fish observation water vehicle approaching the shoal of fish in horizontal fashion and at a deeper diving depth than the shoal of fish,
**characterized in that** the method comprises the following steps:
g) orienting the fish observation water vehicle such that the stern of the fish observation water vehicle is directed to the floor and the bow of the fish observation water vehicle is directed to the water surface,
h) passing through the shoal of fish by means of the fish observation water vehicle and, in the process, optically detecting the shoal of fish, the passage therethrough being implemented at an angle of more than 70° with respect to the water surface.

3. Method for detecting a shoal of fish using a fish observation water vehicle, an autonomous underwater vehicle being selected as fish observation water vehicle, wherein the method comprises the following steps:
i) detecting a shoal of fish,
j) approaching the shoal of fish, with the fish observation water vehicle approaching the shoal of fish in horizontal fashion and at a deeper diving depth than the shoal of fish,
**characterized in that** the method comprises the following steps:
k) orienting the fish observation water vehicle such that the bow of the fish observation water vehicle is directed to the floor and the stern of the fish observation water vehicle is directed to the water surface,
h) passing through the shoal of fish by means of the fish observation water vehicle and, in the process, optically detecting the shoal of fish, the passage therethrough being implemented at an angle of more than 70° with respect to the water surface.

4. Method for detecting a shoal of fish according to any one of the preceding claims, **characterized in that** an autonomous underwater vehicle having at least one first sonar is selected as fish observation water vehicle, the first sonar being directed downward in step b) or directed upward in step f) or in step j).

5. Method for detecting a shoal of fish according to any one of the preceding claims, **characterized in that** an autonomous underwater vehicle having at least one first sonar is selected as fish observation water vehicle, the first sonar being aligned substantially parallel to the water surface in step d) or in step h) or in step l).

6. Method for detecting a shoal of fish according to any one of the preceding claims, **characterized in that** an autonomous underwater vehicle having at least one first optical sensor is selected as fish observation water vehicle, the first optical sensor being aligned substantially parallel to the water surface in step d) or in step h) or in step l).

7. Method according to Claim 6, **characterized in that** an autonomous underwater vehicle having at least one first illuminant is selected as fish observation water vehicle, the first illuminant being used together with the first optical sensor for detection in step d) or in step h) or in step l).

8. Method for detecting a shoal of fish according to any one of the preceding claims, **characterized in that** an autonomous underwater vehicle having at least one first sonar and at least one first optical sensor is selected as fish observation water vehicle, with the first sonar being used to control the first optical sensor, the first sonar triggering the first optical sensor as soon as the first sonar detects at least one fish in the optical detection region of the first optical sensor.

9. Method for detecting a shoal of fish according to any one of the preceding claims, **characterized in that** movement is carried out at a reduced speed in step d) or in step h) or in step l).

10. Method for detecting a shoal of fish according to any one of the preceding claims, **characterized in that** the fish observation water vehicle is rotated about its own longitudinal axis in step d) or in step h) or in step 1) .

11. Method for detecting a shoal of fish according to any one of the preceding claims, **characterized in that** the following steps are carried out after step d) :
m) orienting the fish observation water vehicle such that the stern of the fish observation water vehicle is directed to the floor and the bow of the fish observation water vehicle is directed to the water surface,
d) passing through the shoal of fish by means of the fish observation water vehicle and, in the process, optically detecting the shoal of fish, the passage therethrough being implemented at an angle of more than 70° with respect to the water surface.

12. Method for detecting a shoal of fish according to any one of the preceding claims, **characterized in that** the fish observation water vehicle returns to the water surface in step g), following step d), step h), step 1) or step n).

13. Method for detecting a shoal of fish according to Claim 12, **characterized in that** the fish observation water vehicle passes through the water surface with the stern in step g).

14. Method for detecting a shoal of fish according to any one of the preceding claims, **characterized in that** the fish observation water vehicle uses a single-beam sonar.

15. Method for detecting a shoal of fish according to any one of the preceding claims, **characterized in that** the fish observation water vehicle executes a search manoeuvre in step a) or in step e) or in step i) and, in the process, establishes the exact current position of the shoal of fish.

16. Fish observation water vehicle for carrying out the method according to any one of the preceding claims, wherein the fish observation water vehicle comprises at least one first optical sensor and at least one first sonar, the at least one first optical sensor and the at least one first sonar having a main detection direction substantially orthogonal to the longitudinal direction of the fish observation water vehicle, **characterized in that** the fish observation water vehicle comprises a trim apparatus for the perpendicular alignment of the fish observation water vehicle.

## Revendications

1. Procédé de détection d'un banc de poissons au moyen d'un navire d'observation de poissons, un véhicule sous-marin autonome étant choisi comme navire d'observation de poissons, le procédé comprenant les étapes suivantes :
a) détecter un banc de poissons
b) approcher le banc de poissons, le navire d'observation de poissons s'approchant du banc de poissons horizontalement et à une profondeur de plongée inférieure à celle du banc de poissons,
**caractérisé en ce que** le procédé comprend les étapes suivantes :
c) orienter le navire d'observation de poissons de sorte que la proue du navire d'observation de poissons soit dirigée vers le fond et la poupe de l'navire d'observation de poissons soit dirigée vers la surface de l'eau,
d) faire traverser le banc de poissons par le navire d'observation de poissons et ainsi détecter optiquement le banc de poissons, la traversée s'effectuant suivant un angle de plus de 70° par rapport à la surface de l'eau.

2. Procédé de détection d'un banc de poissons au moyen d'un navire d'observation de poissons, un véhicule sous-marin autonome étant choisi comme navire d'observation de poissons, le procédé comprenant les étapes suivantes :
e) détecter un banc de poissons
f) approcher du banc de poissons, le navire d'observation de poissons s'approchant du banc de poissons horizontalement et à une profondeur de plongée supérieure à celle du banc de poissons,
**caractérisé en ce que** le procédé comprend les étapes suivantes :
g) orienter le navire d'observation de poissons de sorte que la poupe du navire d'observation de poissons soit dirigée vers le fond et la proue du navire d'observation de poissons soit dirigée vers la surface de l'eau,
h) faire traverser le banc de poissons par le navire d'observation de poissons et ainsi détecter optiquement le banc de poissons, la traversée s'effectuant suivant un angle de plus de 70° par rapport à la surface de l'eau.

3. Procédé de détection d'un banc de poissons au moyen d'un navire d'observation de poissons, un véhicule sous-marin autonome étant choisi comme navire d'observation de poissons, le procédé comprenant les étapes suivantes :
i) détecter un banc de poissons
j) approcher le banc de poissons, le navire d'observation de poissons s'approchant du banc de poissons horizontalement et à une profondeur de plongée supérieure à celle du banc de poissons,
**caractérisé en ce que** le procédé comprend les étapes suivantes :
k) orienter le navire d'observation de poissons de sorte que la proue du navire d'observation de poissons soit dirigée vers le fond et la poupe du navire d'observation de poissons soit dirigée vers la surface de l'eau,
1) faire traverser le banc de poissons par le navire d'observation de poissons et ainsi détecter optiquement le banc de poissons, la traversée s'effectuant suivant un angle de plus de 70° par rapport à la surface de l'eau.

4. Procédé de détection d'un banc de poissons selon l'une des revendications précédentes, **caractérisé en ce qu'**un véhicule sous-marin autonome équipé d'au moins un premier sonar est choisi comme navire d'observation de poissons, le premier sonar étant dirigé vers le bas à l'étape b) ou vers le haut à l'étape f) ou à l'étape j).

5. Procédé de détection d'un banc de poissons selon l'une des revendications précédentes, **caractérisé en ce qu'**un véhicule sous-marin autonome équipé d'au moins un premier sonar est choisi comme navire d'observation de poissons, à l'étape d) ou à l'étape h) ou à l'étape 1) le premier sonar étant orienté sensiblement parallèlement à la surface de l'eau.

6. Procédé de détection d'un banc de poissons selon l'une des revendications précédentes, **caractérisé en ce qu'**un véhicule sous-marin autonome équipé d'au moins un premier capteur optique est choisi comme navire d'observation de poissons, à l'étape d) ou à l'étape h) ou à l'étape 1) le premier capteur optique étant orienté sensiblement parallèlement à la surface de l'eau.

7. Procédé selon la revendication 6, **caractérisé en ce qu'**un véhicule sous-marin autonome équipé d'au moins un premier moyen d'éclairage est choisi comme navire d'observation de poissons, à l'étape d) ou à l'étape h) ou à l'étape 1) le premier moyen d'éclairage étant utilisé pour la détection avec le premier capteur optique.

8. Procédé de détection d'un banc de poissons selon l'une des revendications précédentes, **caractérisé en ce qu'**un véhicule sous-marin autonome équipé d'au moins un premier sonar et d'au moins un premier capteur optique est choisi comme navire d'observation de poissons, le premier sonar étant utilisé pour commander le premier capteur optique, le premier sonar déclenchant le premier capteur optique dès que le premier sonar détecte au moins un poisson dans la zone de détection optique du premier capteur optique.

9. Procédé de détection d'un banc de poissons selon l'une des revendications précédentes, **caractérisé en ce qu'**à l'étape d) ou à l'étape h) ou à l'étape 1) le déplacement est effectué à vitesse réduite.

10. Procédé de détection d'un banc de poissons selon l'une des revendications précédentes, **caractérisé en ce qu'**à l'étape d) ou à l'étape h) ou à l'étape 1) le navire d'observation de poissons est mis en rotation sur son propre axe longitudinal.

11. Procédé de détection d'un banc de poissons selon l'une des revendications précédentes, **caractérisé en ce que** les étapes suivantes sont réalisées après l'étape d) :
m) orienter le navire d'observation de poissons de sorte que la poupe du navire d'observation de poissons soit dirigée vers le fond et la proue du navire d'observation de poissons soit dirigée vers la surface de l'eau,
n) faire traverser le banc de poissons par le navire d'observation de poissons et ainsi détecter optiquement le banc de poissons, la traversée s'effectuant suivant un angle de plus de 70° par rapport à la surface de l'eau.

12. Procédé de détection d'un banc de poissons selon l'une des revendications précédentes, **caractérisé en ce que** le navire d'observation de poissons remonte à la surface de l'eau à l'étape g) après l'étape d), l'étape h), l'étape 1) ou l'étape n).

13. Procédé de détection d'un banc de poissons selon la revendication 12, **caractérisé en ce qu'**à l'étape g) le navire d'observation de poissons perce la surface de l'eau avec la poupe.

14. Procédé de détection d'un banc de poissons selon l'une quelconque des revendications précédentes, **caractérisé en ce que** le navire d'observation de poissons utilise un sonar monofaisceau.

15. Procédé de détection d'un banc de poissons selon l'une des revendications précédentes, **caractérisé en ce que** le navire d'observation de poissons effectue une manœuvre de recherche à l'étape a) ou à l'étape e) ou à l'étape i) et détermine ainsi la position actuelle exacte du banc de poissons.

16. Navire d'observation de poissons destiné à mettre en œuvre le procédé selon l'une des revendications précédentes, le navire d'observation de poissons comportant au moins un premier capteur optique, au moins un premier sonar, l'au moins un premier capteur optique et l'au moins un premier sonar ayant une direction de détection principale sensiblement orthogonale à la direction longitudinale du navire d'observation de poissons, **caractérisé en ce que** le navire d'observation de poissons comporte un dispositif de réglage destiné à orienter verticalement le navire d'observation de poissons.
